# EUROPEAN PATENT APPLICATION

(11) **EP 4 635 671 A1**
(43) Date of publication of application: **22.10.2025**
(21) Application number: 24382393.7
(22) Date of filing: 15.04.2024
(51) Int. Cl.: B23K 26/144, B22F 3/105, B23K 26/342

(54) **SYSTEM AND PROCESS FOR LASER CLADDING**

(71) Applicant: Talens Systems SLU, 20870 Guipúzcoa (ES)
(72) Inventor: GABILONDO, Jose Juan, 20870 ELGOIBAR (Guipúzcoa) (ES); ALVAREZ, Piera, 20870 ELGOIBAR (Guipúzcoa) (ES); PINHEIRO, André Felipe, 20870 ELGOIBAR (Guipúzcoa) (ES)
(74) Representative: Balder IP Law, S.L.

(57) **Abstract**

The invention refers to a laser cladding system comprising: a powder feeder adapted to generate a flow of powder, a laser head including a nozzle, and a powder distribution device fluidly communicated with the powder feeder. The system further comprises a powder flow switch and a feedback tube fluidly communicating the powder flow switch with the powder feeder. In a first position of the powder flow switch, the powder feeder, the powder distribution device and the nozzle of the laser head are fluidly communicated, and in a second position, the powder flow switch fluidly communicates a feeding tube with a feedback tube to feed back powder to the powder feeder. The invention also refers to a laser cladding process, in which powdered material is fed back to a powder feeder, while the laser cladding process is not applied to the workpiece.

## Description

### TECHNICAL FIELD

The present invention relates in general to additive manufacturing technologies, that use a powdered filler material, either metal or ceramic powder to build up pieces, to repair or to coat surfaces.

An object of the invention, is to provide a laser cladding equipment and process that optimizes the use of powdered filler material in two aspects, firstly saving powdered filler material to reduce manufacturing cost, and secondly saving production time.

### BACKGROUND OF THE INVENTION

Laser cladding is an industrial process in which a laser beam is focused on a surface of a substrate or a workpiece, while a filler material in the form of a wire or powder - which is a rather expensive material - is supplied through a nozzle to be melted by the laser beam, such that a melt pool is formed on the substrate where the laser beam meets the filler material.

In the case of powder as filler material, powder is conveyed from a powder feeder to a laser head through a single hose, from which it is distributed and injected to a nozzle of the laser head through several inlets. The coaxial nozzle of the laser head generates a flow of powder in the form of a cone converging with the laser beam.

The U.S. patent publications US 2006/0266740 A1, US 2011/0089151 A1 describe laser cladding equipment of this type.

When a laser cladding machine is started, powdered filler material is injected into the nozzle of a laser head, however, the flow of powder requires some time to stabilise in terms of flow rate and alignment of the powder particles, so during this transitory period during which the flow of powder is unstable, the laser cladding process cannot be started and, as a result, powdered filer material is wasted.

Furthermore, during a laser cladding manufacturing process, the machine typically has to be stopped several times, for example to check (manually or automatically) during the production periodically the laser power, the optics, etc. During these periods, powder injection is interrupted and when the process is to be resumed, the laser cladding process cannot be started until the transition period mentioned above has been completed, thus, wasting process time and filler material.

A laser cladding process, that saves powder filler material and production time would therefore be a significant improvement in this technical field.

### DESCRIPTION OF THE INVENTION

The invention is defined in the attached claims, and satisfactorily solves the above-described drawbacks of the prior art, by the provision of a laser cladding system in which a powdered filler material is collected to be used again while the laser cladding process is temporally stopped, in order to save material, and in which the flow powdered filler material is not interrupted while the laser cladding process is temporally stopped in order to keep a stable flow of powder ready, when the laser cladding process is resumed.

More in particular, a first aspect of the invention refers to a laser cladding system comprising: a powder feeder adapted to generate a flow of powder, a laser head including a nozzle having at least one powder inlet and configured to produce a jet of powder, and a powder distribution device fluidly communicated with the powder feeder by means of a feeding tube, and with the nozzle of the laser head to supply a flow of powder to the nozzle.

According to the invention, the laser cladding system further comprises a powder flow switch or changeover switch, and a feedback tube fluidly communicating the powder flow switch with the powder feeder, wherein the powder flow switch is configured to be selectively set in two positions, namely: a first position in which the powder feeder, the powder distribution device and the nozzle of the laser head are fluidly communicated, so that the laser head can operate on a working piece, and a second position while the process is temporally interrupted, in which the powder flow switch fluidly communicates the feeding tube with the feedback tube, to feed back powder to the powder feeder or to a container. In the second position, the powder flow switch shuts the passage of flow to the nozzle of the laser head.

In a first embodiment of the invention, the powder flow switch is installed in the powder distribution device, and in a second embodiment, alternative to the first embodiment, the powder flow switch is installed in the feeding tube, that is, upstream the powder distribution device.

In the first embodiment of the invention, the powder distribution device comprises: a straight conduit for the passage of a flow of powder, a first duct fluidly communicated with the nozzle of the laser head, and a second duct fluidly communicated with the feedback tube.

The powder flow switch is interposed between the straight conduit and the first and second ducts, such that in the first position, the powder flow switch fluidly communicates the straight conduit with the first duct and shuts the passage of powder to the second duct.

In the second position, the powder flow switch fluidly communicates the straight conduit with the second duct, and shuts the passage of powder to the first duct, thus, allowing a flow of powder coming from the straight conduit to be selectively conducted through the first duct or through the second duct.

The powder distribution device is configured to branch off the flow of powder supplied by the powder feeder, into at least two discrete flows of powder.

The powder flow switch has a conduit which fluidly communicates the straight conduit with the first duct in the first position, and which fluidly communicates the straight conduit with the second duct in the second position of the powder flow switch. The power flow switch is rotatable or displaceable to transit from the first position to the second position and vice versa.

The powder flow switch may comprise a flexible tube which defines the conduit of the powder flow switch, such that one end of the flexible tube is coupled to the straight conduit. The powder flow switch further comprises a rotatable member, mechanically coupled to the flexible tube and adapted to bend the flexible tube upon rotation, to bring the flexible tube to the first position in which the other end of the flexible tube fluidly communicates with the first duct, and to the second position in which the flexible tube fluidly communicates with the second duct.

In the first position of the powder flow switch, the straight conduit, the conduit of the powder flow switch and the first duct, are coaxially aligned, so as to define a straight passage for a flow of powder.

Preferably, the second duct extends along a direction (Y) intersecting the axis (X) of the straight conduit, and inclined with respect to the straight conduit. The powder flow switch is rotatable in a direction orthogonal to the axis (X) of the straight conduit.

The powder distribution device has a chamber fluidly communicated with the first duct, and placed downstream the first duct, wherein the cross-sectional area of the chamber is larger than the cross-sectional area of the first duct. The chamber is coaxially arranged with the first duct, and it has a powder accumulation surface placed opposite the outlet end of the straight conduit.

The powder distribution device further comprises at least two outlet ducts placed downstream the chamber, and fluidly communicated with the chamber. The outlet ducts are arranged to diverge with respect to each other, so as to branch off powder accumulated in the chamber.

Preferably, the powder distribution device has a rigid tube inside which is formed the straight conduit, and a distribution head mechanically coupled to one end of the rigid tube. The first and the second ducts, the chamber and the outlet ducts are formed in the distribution head.

The powder flow switch is placed inside the distribution head, and it includes a shaft which extends outside the distribution head, such that the powder flow switch can be operated from outside the distribution head.

In the second embodiment of the invention, the powder flow switch, instead of being installed in the powder distribution device, it is installed in the feeding tube, such that in the first position, the powder flow switch allows passage of powder through the feeding tube and it shuts the passage of flow to the feedback tube. In the second position, the powder flow switch directs the flow of powder from the first tube to the feedback tube, and it shuts the passage of flow to the powder distribution device.

The construction of the powder flow switch in this second embodiment, may be similar to the one previously described for the first embodiment.

Another aspect of the invention refers to a laser cladding process, which comprising the steps of:
generating a flow of powdered material from a powder feeder,
branching off the flow of powdered material by means of a powder distribution device, into two or more discrete flows of powdered material, and
feeding the discrete flows of powdered material into a nozzle of a laser head, and working on a workpiece by laser cladding.

According to the process of the invention, while the laser cladding process is temporally interrupted, generation of the flow of powdered material is continued, but the flow of powdered material is fed back to the powder feeder, and it is collected in a reservoir or a hopper of the powder feeder.

In a first alternative of the process, the powdered material is fed back to the powder feeder from the powder distribution device through a feedback line.

In a second alternative of the process, the powdered material is fed back to the powder feeder from a feeding tube fluidly communicating the powder feeder with the powder distribution device.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a front elevational view a powder distribution device according to the invention, represented as a transparent body to illustrate its internal configuration.

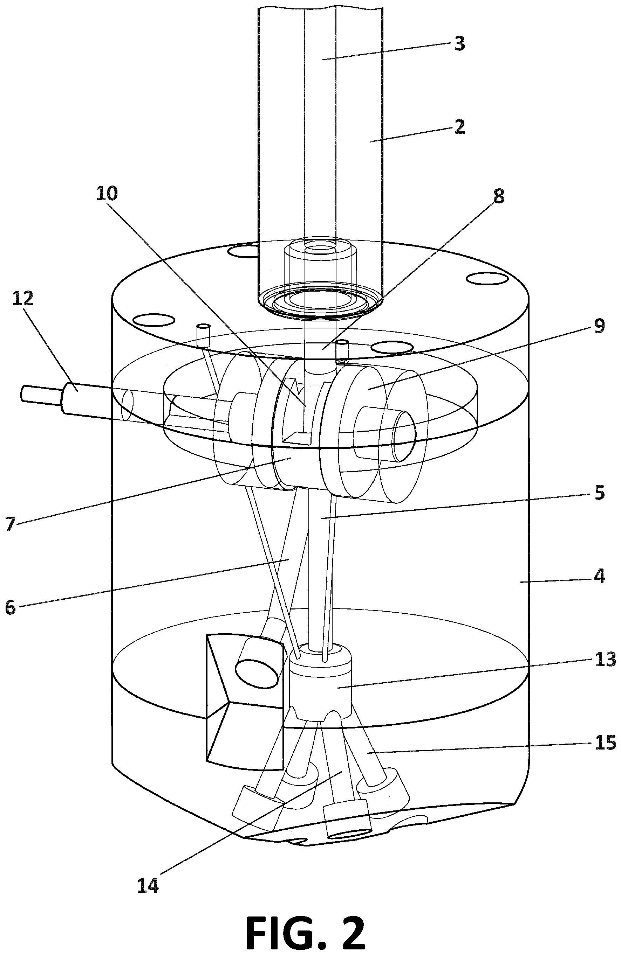

Figure 2.- shows an enlarged view in perspective of the distribution head of the device of figure 1.
Figure 3.- shows two representations of the distribution head in the first position. Figure A another representation of the distribution head represented as a transparent body, and in Figure B a cross-sectional view of the same representation of Figure A.
Figure 4.- shows two representations of the distribution head in the second position. Figure A another representation of the distribution head represented as a transparent body, and in Figure B a cross-sectional view of the same representation of Figure A.
Figure 5.- shows a perspective view of the powder distribution device.
Figure 6.- shows an exploded view of the powder distribution device.
Figure 7.-. shows a perspective view of a lower section of the distribution head.
Figure 8.- shows a schematic representation of a laser cladding system incorporating the powder distribution device of the previous figures.
Figure 9.- shows a schematic representation of a laser cladding system, having the powder switch installed in the feeding tube.

### PREFERRED EMBODIMENTS OF THE INVENTION

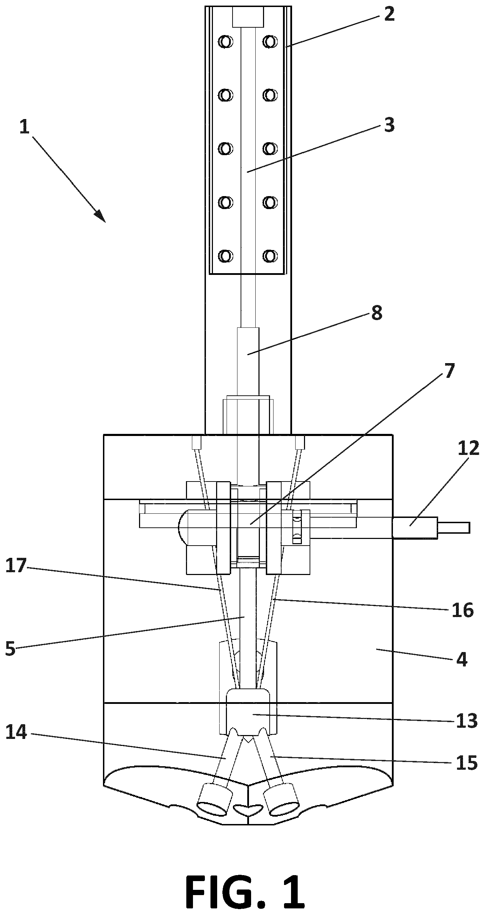

**Figure 1** shows a powder distribution device (1) which comprises a rigid tube (2) inside which is formed a straight conduit (3) for the passage of a flow of powder, which has constant cross-sectional area, and a distribution head (4) mechanically coupled to one end of the rigid tube (2).

Inside the distribution head (4), first and the second ducts (5,6) are formed, and a powder flow switch (7) is accommodated inside the distribution head (4), and it is interposed between the straight conduit (3) and the first and the second ducts (5,6).

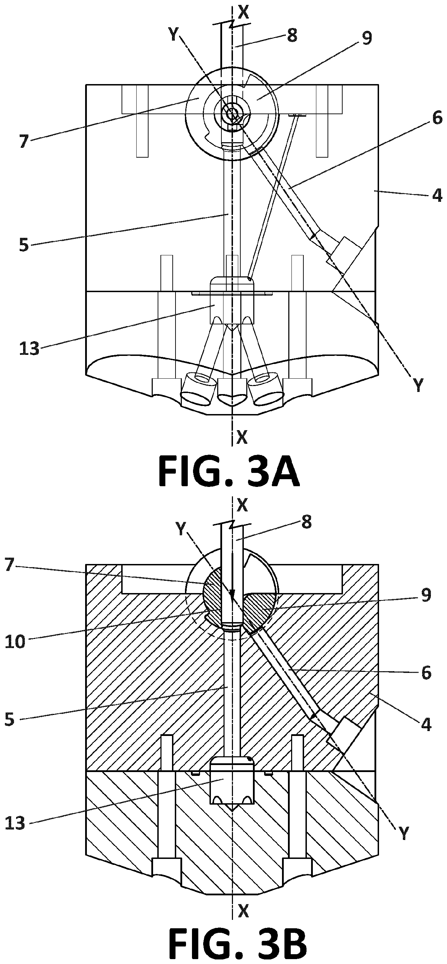

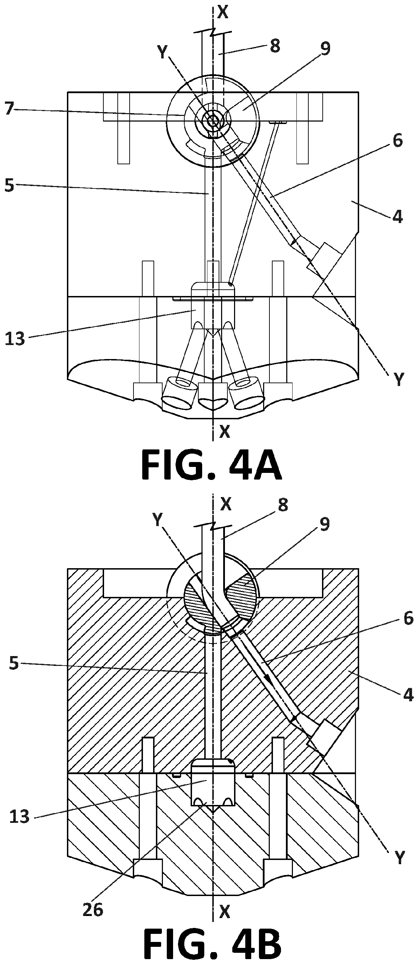

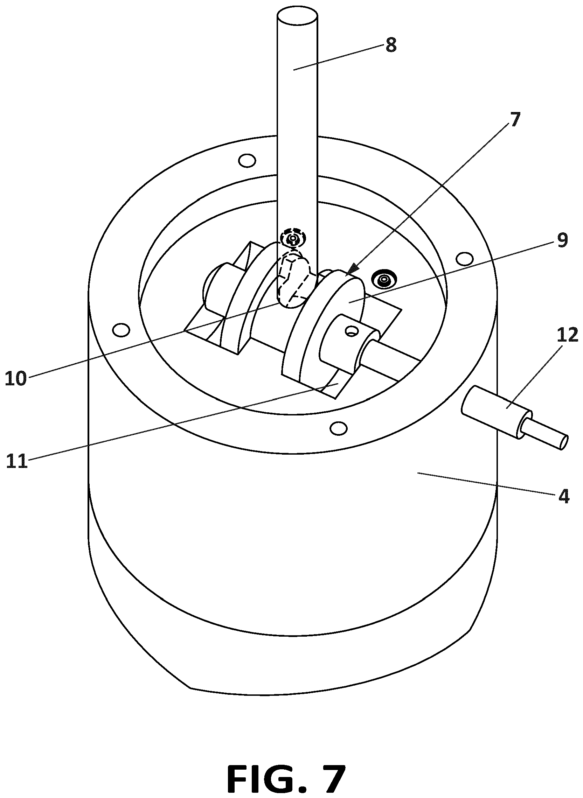

The powder distribution device (1) incorporates a flexible tube (8), such that an upper part of the flexible tube (8) is coupled to the straight conduit (3), and a lower part is engaged with the powder flow switch (7) as better shown in **Figure 7****.** The powder flow switch (7) has a rotatable member (9) with a passing-through opening (10) inside which a lower part of the flexible tube (8) is received, so that the rotatable member (9) would bend the flexible tube upon rotation, to bring the flexible tube (8) to a first position shown in **Figures 3A, 3B****,** in which the lower end of the flexible tube (8) is fluidly connected with the first duct (5), and to a second position shown in **Figures 4A, 4B** in which the flexible tube (8) is fluidly connected with the second duct (6), thus, allowing a flow of powder coming from the straight conduit (3) to be selectively conducted through the first duct (5) or through the second duct (6).

In the first position shown in **Figures 3A, 3B****,** the flexible tube (8) fluidly communicates the straight conduit (3) with the first duct (5) and shuts the passage of powder to the second duct (6). In this first position, the straight conduit (3), the flexible tube (8) and the first duct (5), are co-aligned along an axis (X) and together define a straight passage, preferably cylindrical, for the flow of power to be fed to a laser head.

In the second position shown in **Figures 4A, 4B****,** the flexible tube (8) is bended and fluidly communicates the straight conduit (3) with the second duct (6) and shuts the passage of powder to the first duct (5). In this second position, the powder can be fed back to a powder hopper, when a laser head is not operative due to maintenance or for replacing a component, so that the flow of power from the powder feeder is not interrupted and powdered material is recovered.

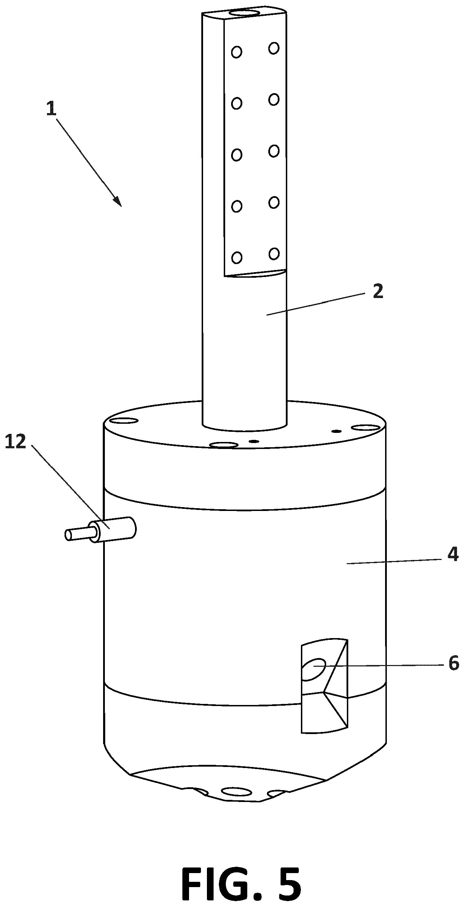

The second duct (6) extends along an axis (Y) which intersects the axis (X) and it is inclined with respect to that axis (X). The second duct (6) communicates directly with the distribution head exterior, as shown for instance in **Figure 5****.**

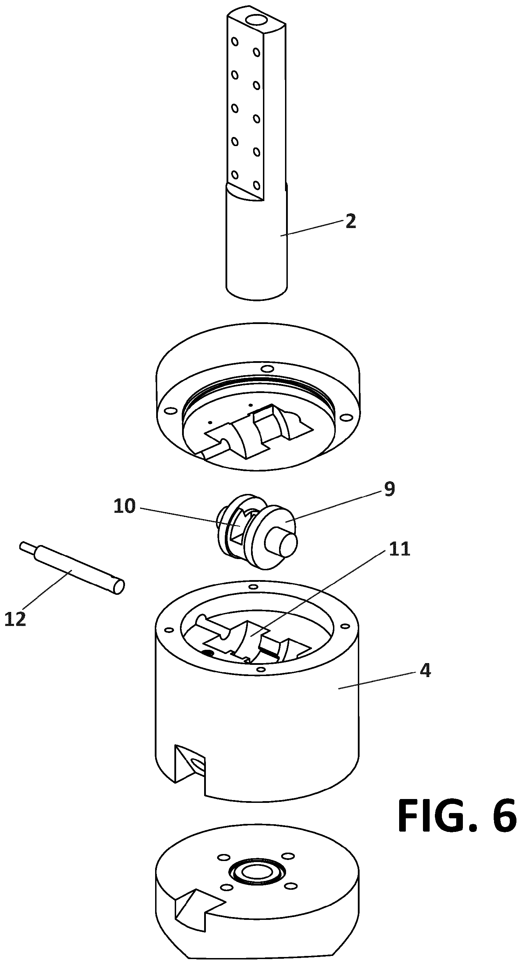

As better shown in **Figures 6** and **7****,** the powder flow switch (7) has a rotatable member (9) received in a bed (11) formed internally in the distribution head (4), and it includes a shaft (12) which extends outside the distribution head (4), such that the powder flow switch can be operated from outside the distribution head (4). The rotatable member (9) and the shaft (12), are rotatable in a direction orthogonal to the axis (X) of the straight conduit (3).

The powder distribution device (1) has a chamber (13) formed in the distribution head (4), which is fluidly communicated with the first duct (5), and it is placed downstream the first duct (5). The cross-sectional area of the chamber (13) is larger than the cross-sectional area of the first duct (5), and the chamber (13) is coaxially arranged with the first duct (5). The chamber (13) has a powder accumulation surface (26) placed opposite the outlet end of the straight conduit (3).

The powder distribution device (1) further comprising at least two outlet ducts (14, 15) placed downstream the chamber (13) and fluidly communicated with the chamber. The outlet ducts (14, 15) are arranged to diverge with respect to each other, so as to branch off powder accumulated in the chamber (13).

Furthermore, the powder distribution device (1) has a first channel (16) which communicates the chamber (13) with the exterior of the distribution head (4), for measuring pressure in the chamber (13) by means of a pressure sensor. A second channel (17) also communicates the chamber (13) with the exterior of the distribution head (4), which can be used for injecting a carrying gas into the chamber (13), in order to boost the flow of powder when required, for example when the process is started, or when the pressure sensor detects that pressure in the chamber is too low.

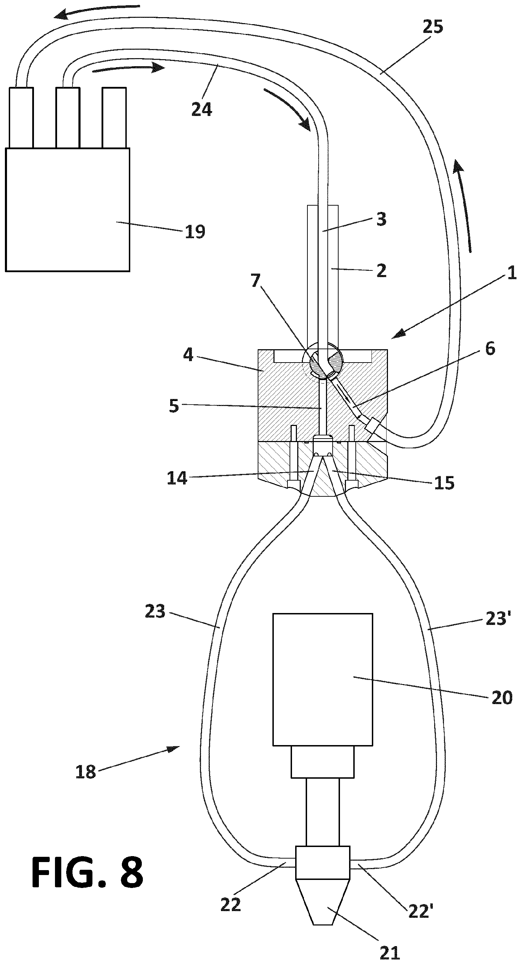

**Figure** 8 shows a schematic representation of a laser cladding system (18) incorporating the powder distribution device (1) previously described, disposed in a perfectly vertical position with respect to ground.

The system (18) also includes: a powder feeder (19) adapted to supply a flow of powder, and a laser head (20) including a nozzle (21) having two or more powder inlets (22,22'). Two tubes (23, 23') communicates respectively the two outlet ducts (14, 15) with powder inlets (22,22') of the nozzle (21). The powder distribution device (1) is fluidly communicated with the powder feeder (19) by means of a flexible hose (24), preferably an antistatic flexible hose, which is coupled to the straight conduit (3) of the rigid tube (2).

The second duct (6) is fluidly communicated with a hopper of the powder feeder (19) or with a other powder reservoir, by means of a feedback tube (25), to collect powder when the powder flow switch (7) is in its second position, when the laser cladding process is not applied to the workpiece, during a transitory period when starting the laser cladding process, when the laser cladding process is interrupted, or when the laser cladding process is resumed.

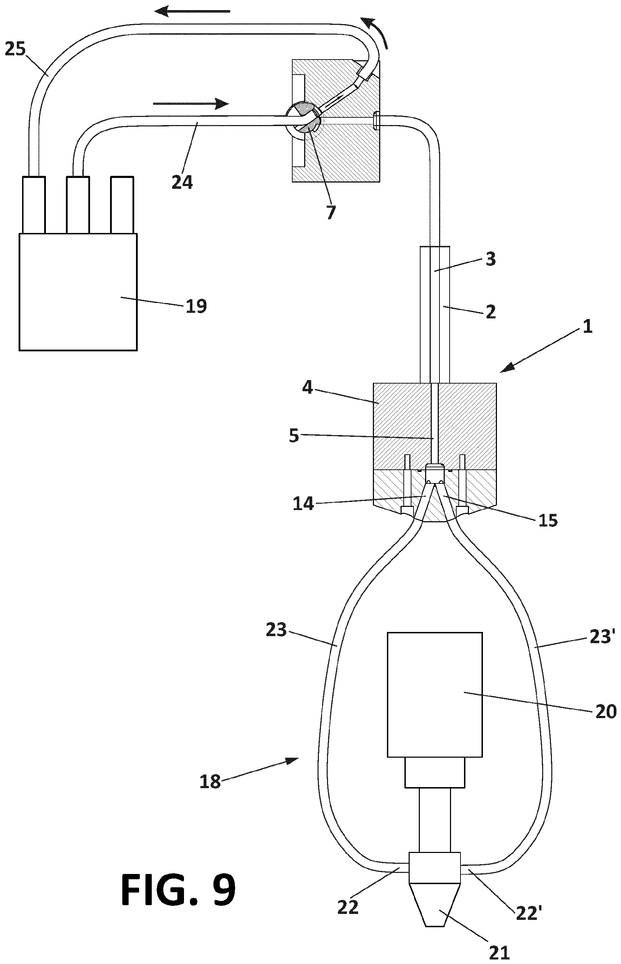

**Figure 9** shows a schematic representation of an alternative configuration of the laser cladding system (18), in which the powder switch (7) is installed in the feeding tube (24) upstream the powder distribution device (1), such that in the first position, the powder flow switch (7) allows passage of powder through the feeding tube (24) towards the powder distribution device (1), and it shuts the passage of flow to the feedback tube (25). In the second position, the powder flow switch (7) directs the flow of powder from the feeding tube (24) to the feedback tube (25) and from there back to the powder feeder (19), and it shuts the passage of flow to the powder distribution device (1).

The construction of the powder flow switch (7) in this second embodiment, may be the same to the one previously described for the embodiment of previous figures.

## Claims

1. A laser cladding system (18), comprising:
a powder feeder (19) adapted to generate a flow of powder,
a laser head (20) including a nozzle (21) having at least one powder inlet (22, 22'), and configured to produce a jet of powder,
a powder distribution device (1) fluidly communicated with the powder feeder (19) by means of a feeding tube (24), and with the nozzle (21) of the laser head (20) to supply a flow of powder to the nozzle (21),
**characterized in that**,
the laser cladding system (18) further comprises a powder flow switch (7) and a feedback tube (25) fluidly communicating the powder flow switch (7) with the powder feeder (19), and wherein the powder flow switch (7) is configured to be set selectively in two positions,
a first position in which the powder feeder (19), the powder distribution device (1) and the nozzle (21) of the laser head (20) are fluidly communicated, and
a second position in which the powder flow switch (7) fluidly communicates the feeding tube (24) with the feedback tube (25) to feed back powder to the powder feeder (19), and in which the powder flow switch (7) shuts the passage of flow to the nozzle (21) of the laser head (20).

2. A laser cladding system according to claim 1, wherein the powder distribution device (1) comprises: a straight conduit (3) for the passage of a flow of powder, a first duct (5) fluidly communicated with the nozzle (21) of the laser head (20), and a second duct (6) fluidly communicated with the feedback tube (25), and wherein the powder flow switch (7) interposed between the straight conduit (3) and the first and second ducts (5,6), such that in the first position, the powder flow switch (7) fluidly communicates the straight conduit (3) with the first duct (5) and shuts the passage of powder to the second duct (6), and in the second position the powder flow switch (7) fluidly communicates the straight conduit (3) with the second duct (6) and shuts the passage of powder to the first duct (5), thus, allowing a flow of powder coming from the straight conduit (3) to be selectively conducted through the first duct (5) or through the second duct (6).

3. A laser cladding system according to claim 1, wherein the powder flow switch (7) is installed in the feeding tube (24), such that in the first position, the powder flow switch (7) allows passage of powder through the feeding tube (24) towards the powder distribution device (1) and it shuts the passage of flow to the feedback tube (25), and in the second position, the powder flow switch (7) directs the flow of powder from the feeding tube (24) to the feedback tube (25) and shuts the passage of flow to the powder distribution device (1).

4. A laser cladding system according to claim 2, wherein the powder distribution device (1) is configured to branch off the flow of powder supplied by the powder feeder (19) into at least two discrete flows of powder.

5. A powder distribution device according to any of the claims 2 or 4, wherein the powder flow switch (7) has a conduit which fluidly communicates the straight conduit (3) with the first duct (5) in the first position, and which fluidly communicates the straight conduit (3) with the second duct (6) in the second position of the powder flow switch (7), and wherein the power flow switch (7) is rotatable or displaceable to transit from the first position to the second position and vice versa.

6. A powder distribution device according to claim 5, wherein the powder flow switch comprises a flexible tube (8) which defines the conduit of the powder flow switch, and wherein one end of the flexible tube (8) is coupled to the straight conduit (3), the powder flow switch further comprises a rotatable member (9) mechanically coupled to the flexible tube (8) and adapted to bend the flexible tube (8) upon rotation, to bring the flexible tube to the first position in which the other end of the flexible tube fluidly communicates with the first duct (5), and to the second position in which the flexible tube (8) fluidly communicates with the second duct (6).

7. A powder distribution device according to claim 5 or 6, wherein in the first position of the powder flow switch (7), the straight conduit (3), the conduit of the powder flow switch and the first duct (5), are coaxially aligned, so as to define a straight passage for a flow of powder.

8. A powder distribution device according to any of the claims 2, and 4 to 7, wherein the second duct (6) extends along a direction (Y) intersecting the axis (X) of the straight conduit (3), and inclined with respect to the straight conduit (3).

9. A powder distribution device according to any of the claims 2, and 4 to 8, wherein the powder flow switch (7) is rotatable in a direction orthogonal to the axis (X) of the straight conduit (3).

10. A powder distribution device according to any of the claims 2, and 4 to 9, further comprising a chamber (13) fluidly communicated with the first duct (5) and placed downstream the first duct (5), wherein the cross-sectional area of the chamber (13) is larger than the cross-sectional area of the first duct (5), and wherein the chamber (13) is coaxially arranged with the first duct (5), the powder distribution device (1) further comprising at least two outlet ducts (14, 15) placed downstream the chamber (13) and fluidly communicated with the chamber (13), and wherein the outlet ducts (14, 15) are arranged to diverge with respect to each other, so as to branch off powder accumulated in the chamber (13).

11. A powder distribution device according to claim 10, wherein the chamber (13) has a powder accumulation surface (26) placed opposite the outlet end of the straight conduit (3).

12. A powder distribution device according to any of the claims 2, 4 to 11, further comprising a rigid tube (2) inside which is formed the straight conduit (3), and a distribution head (4) mechanically coupled to one end of the rigid tube (2), and wherein the first and the second ducts (5, 6), the chamber (13) and the outlet ducts (14, 15) are formed in the distribution head (4), and wherein the powder flow switch (7) is placed inside the distribution head (4) and it includes a shaft (12) which extends outside the distribution head (4) such that the powder flow switch (7) can be operated from outside the distribution head (4).

13. A laser cladding process, comprising the steps of:
generating a flow of powdered material from a powder feeder,
branching off the flow of powdered material by means of a powder distribution device, into two or more discrete flows of powdered material,
feeding the discrete flows of powdered material into a nozzle of a laser head, and working on a workpiece by laser cladding, and
while the laser cladding process is not applied to the workpiece, then continue generating the flow of powdered material, and feeding back the flow of powdered material to the powder feeder, and it is collected in a reservoir or a hopper of the powder feeder.

14. A laser cladding process according to claim 13, wherein the powdered material is fed back to the powder feeder from the powder distribution device through a feedback line.

15. A laser cladding process according to claim 13, wherein the powdered material is fed back to the powder feeder from a feeding tube fluidly communicating the powder feeder with the powder distribution device.
